Europäisches Patentamt

European Patent Office

Office européen des brevets

(19)

(11) Numéro de publication : **0 140 756 B2**

(12)

# NOUVEAU FASCICULE DE BREVET EUROPEEN

(45) Date de publication du nouveau fascicule du brevet : **12.06.91 Bulletin 91/24**

(51) Int. Cl.⁵ : **B61B 7/04,** B61B 12/12, H02P 7/68

(21) Numéro de dépôt : **84401920.8**

(22) Date de dépôt : **26.09.84**

(54) Dispositif d'entraînement des câbles d'une installation de transport à câbles aériens.

(30) Priorité : **03.10.83 FR 8315838**

(43) Date de publication de la demande :
**08.05.85 Bulletin 85/19**

(45) Mention de la délivrance du brevet :
**20.04.88 Bulletin 88/16**

(45) Mention de la décision concernant
l'opposition :
**12.06.91 Bulletin 91/24**

(84) Etats contractants désignés :
**AT CH DE IT LI SE**

(56) Documents cités :
**EP-A- 0 015 211
EP-A- 0 093 680
CA-A- 905 527
DE-C- 441 183
FR-A- 1 249 949
FR-A- 2 448 464
FR-B- 2 430 901**

(56) Documents cités :
**GB-A- 1 078 195
US-A- 3 402 824
US-A- 3 760 246
US-A- 3 789 280
M.Bizot "La commande des moteurs électriques et son application aux engins de levage"
1961 - Edition Sodina - Nanterre, pages 161 à 164
"Automatismes en levage - Tome 2: Mouvements horizontaux" - Bulletin technique 93.2 - sep. 1977 - La télémécanique électrique Nanterre - pages 24 et 25**

(73) Titulaire : **Creissels, Denis
43, Bld. des Alpes
F-38240 Meylan (FR)**

(72) Inventeur : **Creissels, Denis
43, Bld. des Alpes
F-38240 Meylan (FR)**

(74) Mandataire : **Kremer, Robert A.M. et al
BUREAU D.A. CASALONGA - JOSSE
Morassistrasse 8
W-8000 München 5 (DE)**

EP 0 140 756 B2

Jouve, 18, rue Saint-Denis, 75001 PARIS

## Description

La présente invention concerne un dispositif d'entraînement d'une installation de transport à deux boucles sans fin de câbles aériens.

Le document FR-A-2 430 901 décrit une installation de transport à deux câbles auxquels sont fixés à demeure des augets. Le synchronisme des deux câbles étant assuré par la rigidité des augets, ce document envisage la possibilité d'utiliser un système différentiel électrique mais n'en propose aucune structure.

Dans le document EP-A-0 093 680 (publié le 09.11.83, ne faisant partie de l'état de la technique au sens de l'article 54(3) de la CBE et ne pouvant être pris en compte pour l'appréciation de l'activité inventive) la demanderesse a déjà proposé un dispositif d'entraînement d'une installation de transport à deux boucles sans fin de câbles aériens. Chaque véhicule est accouplé en ligne à deux câbles parallèles et pour égaliser en permanence les forces de traction exercées par ces deux câbles sur le véhicule et ainsi compenser notamment de faibles différances de longueur des câbles, les deux poulies d'entraînement des câbles sont solidarisées par un système différentiel, par exemple électrique. Le système préconisé mesure la puissance fournie par chaque moteur à la poulie associée et un dispositif de régulation règle l'alimentation des moteurs pour égaliser en permanence ces puissances. Les deux boucles de câble étant absolument identiques elles se déplacent en sychronisme en entraînant les véhicules accouplés aux câbles.

Le but de la présente invention est de permettre la réalisation d'un différentiel électrique simple et fiable, approprié à l'entraînement des deux poulies d'une telle installation.

Selon la nouvelle revendication principale, le dispositif d'entraînement d'une installation de transport à deux boucles sans fin de câbles aériens dans lequel chaque boucle passe dans les stations d'extrémité sur une poulie de renvoi et dans lequel les deux poulies de l'une des stations sont entraînées chacun en rotation par un moteur électrique, les deux moteurs étant reliés par un système différentiel électrique et chaque véhicule étant accouplé en ligne à une paire de câbles parallèles dont l'un appartient à l'une desdites boucles et dont l'autre appartient à l'autre desdites boucles, et est tel que lesdits véhicules sont désaccouplés desdits câble et réaccouplés aux stations d'extrémité, qu'un dispositif de régulation de l'alimentation desdits moteurs électriques comprend une source d'alimentation en courant continu commune aux deux moteurs, deux génératrices tachymétriques de mesure de la vitesse de rotation des moteurs respectifs et un bloc de comparaison du signal de vitesse le plus élevé à une valeur de consigne de vitesse pour élaborer un signal de correction de tension d'alimentation des moteurs, et que lesdits moteurs sont des moteurs identiques à excitation indépendante et comportant chacun une résistance électrique à valeur fixe et de caractéristiques identiques insérée en série dans chaque circuit de liaison de l'induit du moteur à la source de courant, de manière à équilibrer en permanence les puissances fournies par les deux moteurs aux deux boucles sans fin de câbles aériens

Les propriétés de souplesse et de facilité de réglage de la vitesse des moteurs à courant continu sont bien connues et ces moteurs sont couramment utilisés dans les installations à câble aérien, notamment les téléfériques, télécabines et télésièges. En insérant selon l'invention une résistance dans le circuit d'induit de chaque moteur on crée une autorégulation du dispositif d'entrainement, dont le fonctionnement peut être schématisé de la manière suivante. Lorsque l'une des boucles de câble prend une légère avance sur l'autre, elle assure une plus grande part de l'effort de traction des charges accouplées aux câbles et la puissance absorbée par cette boucle augmente. L'intensité du courant d'induit du moteur correspondant augmente en conséquence. Cette augmentation du courant d'induit provoque une chute de tension accrue aux bornes de la résistance insérée dans le circuit d'induit et une chute correspondante de la tension d'induit du moteur. On sait qu'une baisse de la tension d'induit de ces moteurs à courant continu à excitation séparée provoque une diminution de la vitesse du moteur et de ce fait un ralentissement du câble entraîné. L'ensemble constitue un système de régulation stable qui répartit également la puissance requise entre les deux moteurs, si l'on prend soin d'utiliser des moteurs identiques alimentés par une même source de courant.

Selon un développement de l'invention, le courant d'excitation de chaque moteur peut être réglé notamment à l'origine, de façon à compenser d'inévitables légères différences de caractéristiques des moteurs ou de leur circuit d'alimentation.

En fonctionnement normal, le différentiel électrique selon l'invention assure le déplacement synchrone des deux câbles et une traction équilibrée des véhicules accouplés à ces câbles. Il n'en est plus de même pendant des périodes transitoires, notamment de freinage mécanique de service ou d'urgence, et un dispositif simple de maintien du synchronisme des deux câbles pendant ces périodes transitoires, évitant toute mise en travers des véhicules accouplés aux câbles, est décrit ci-dessous à titre d'exemple ne faisant pas partie de la présente invention, mais fait l'objet de la demande européenne EP-A-0 226 838

Selon cet exemple, le dispositif d'entraînement à réducteurs de vitesse comporte un dispositif d'accouplement mécanique débrayable des arbres grande vitesse desdits réducteurs pour accoupler et imposer une rotation synchrone des deux poulies d'entraînement en position embrayée du dispositif d'accouplement.

D'autres avantages et caractéristiques ressortiront plus clairement de la description qui va suivre d'un mode de mise en oeuvre de l'invention, donné à titre d'exemple non limitatif et représenté aux dessins annexés, dans lesquels :

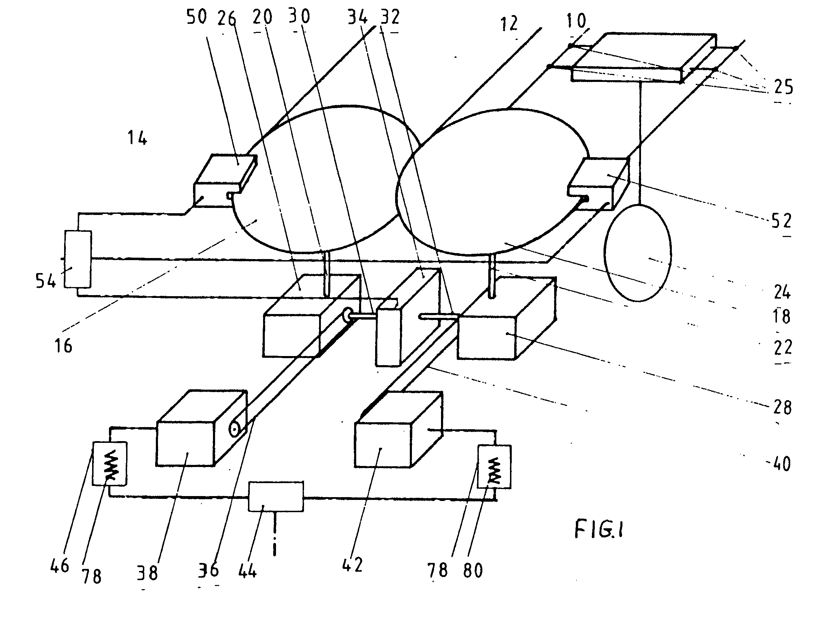

- la figure 1 est une vue schématique en perspective d'un dispositif d'entraînement selon l'invention ;
- la figure 2 est le schéma électrique de l'alimentation des moteurs du dispositif d'entraînement selon la fig. 1.

Sur les figures, deux boucles de câbles porteurs-tracteurs 10, 12 d'une télécabine s'étendent en circuit fermé entre deux stations dont seule la station motrice 14 est représentée, en passant dans les stations sur des poulies 16, 18 d'extrémités à axe vertical 20, 22. Les poulies d'extrémités 16, 18 de la station 14 sont des poulies motrices entraînant les câbles 10, 12 en continu à une même vitesse. Chaque véhicule 24 est accouplé par des pinces 25 aux deux câbles 10, 12 en ligne, plusieurs véhicules 24 pouvant se succéder ou être échelonnés le long des câbles 10, 12. A l'entrée d'une station les véhicules 24 sont désaccouplés des câbles 10, 12 et pris en charge par des rails de transfert passant devant des quais de débarquement et d'embarquement (non représentés). Les passagers montent et descendent des véhicules 24 à l'arrêt ou circulant à faible vitesse et à la sortie de la station les véhicules 24 sont accélérés par tout moyen approprié avant d'être réaccouplés aux câbles 10, 12 sur la voie opposée. Ce fonctionnement des télécabines est bien connu des spécialistes.

Les câbles 10, 12 porteurs-tracteurs sont parallèles et à un même niveau en ligne, leur écartement constant étant voisin de 75 cm.

Les axes 20, 22 des poulies motrices 16, 18 sont les arbres petite vitesse de réducteurs 26, 28 dont les arbres grande vitesse 30, 32 sont alignés et reliés mécaniquement par un embrayage 34. L'arbre 30 est relié par une transmission à courroie 36 à un moteur 38 tandis que l'arbre 32 est relié par une transmission à courroie 40 à un moteur électrique 42. Les deux chaînes cinématiques sont identiques l'ensemble étant parfaitement symétrique. Les deux moteurs 38, 42 sont alimentés par une même source de courant 44 par l'intermédiaire de blocs de commande 46, 48 décrits en détail ci-dessous.

Un système de freinage mécanique, schématiquement représenté par un étrier de freinage 50 enserrant la poulie 16 et un étrier de freinage 52 enserrant la poulie 18 est piloté par un bloc de commande 54. Les freins peuvent bien entendu être d'un type différent et coopérer avec d'autres parties du dispositif d'entraînement. Le bloc 54 commande également l'embrayage 34, de façon à accoupler rigidement les arbres grande vitesse 30, 32 dès le freinage des poulies 16, 18. L'embrayage 34 peut être du type électrique ou de tout autre type approprié.

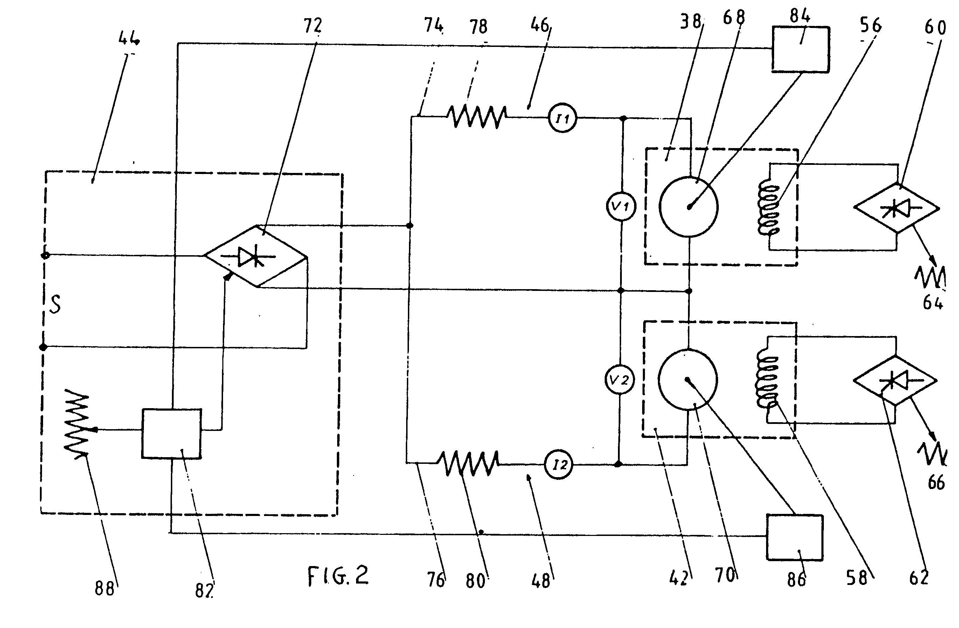

En se référant plus particulièrement à la figure 2, qui représente le schéma électrique d'alimentation des moteurs 38, 42, on vit que ces moteurs à courant continu sont à excitation indépendante, l'inducteur 56, 58 étant alimenté par une source de courant continu, représentée par un pont de thyristor 60, 62 piloté par un potentiomètre de réglage 64, 66. Les induits 68, 70 sont reliés à un pont de thyristor 72 de la source de courant 44 par des circuits d'induit 74, 76 dans lesquels sont insérés en série des résistances 78, 80. L'allumage des thyristors avantageusement montés en double pont 72, est piloté par un bloc de commande 82 recevant les signaux de vitesse réelle des moteurs 38, 42 par des dynamotachymétriques 84, 86 une valeur de consigne étant fournie par un potentiomètre 88 d'affichage de la vitesse désirée. Le bloc 82 compare en permanence le signal de vitesse réelle le plus élevé à la vitesse de consigne et commande l'angle de conduction des thyristors 72 pour varier la tension d'induit et par là la vitesse des moteurs 38, 42. De tels systèmes de régulation de vitesse sont bien connus des spécialistes et il est inutile de les décrire plus en détail. Des appareils de mesure, notamment des voltmètres $V_1$, $V_2$, connectés aux bornes des induits 68, 70, mesurent la tension d'induit et des ampèremètres $I_1$, $I_2$, branchés dans les circuits d'induit, indiquent les courants d'induit. Le courant inducteur peut également être mesuré et les signaux de mesure peuvent être traités dans des blocs de signalisation et de contrôle (non représentés).

Le dispositif d'entraînement selon l'invention fonctionne de la manière suivante :

En fonctionnement normal, l'embrayage 34 est débrayé et les freins 50, 52 desserrés. Le moteur 38 entraîne la poulie 16 et le moteur 40 la poulie 18. Les véhicules 24 accouplés aux câbles d'entraînement 10, 12 constituent une liaison entre ces câbles 10, 12. Si la force de traction des véhicules 24 est répartie entre les câbles 10, 12 les moteurs 38, 42 fournissent aux poulies 16, 18 la même puissance, les courants $I_1$, $I_2$ dans leurs circuits d'induit étant égaux. Etant alimentés par la même source de courant 44 à travers des résistances identiques 78, 80 leur tension d'induit $V_1$, $V_2$ sont égales et par là même leur vitesse de rotation. Les câbles 10, 12 se déplacent en synchronisme parfait. Leur vitesse peut être réglée par le potentiomètre 88 qui pilote le bloc 82 de commande d'allumage des thyristors 72.

Si l'un des câbles, par exemple le câble 12 prend un léger retard, ce retard pouvant résulter d'une plus grande longueur ou d'un glissement sur la poulie d'entraînement, le câble 10 en avance assurera une plus grande part de l'effort de traction et le courant d'induit $I_1$, augmente en conséquence. La chute de tension aux bornes de la résistance 78, qui est égale

à $R_1l_1$, $R_1$ étant la valeur de la résistance, augmente et provoque une baisse de la tension d'induit $V_1$. La vitesse du moteur 38 diminue jusqu'au rétablissement de l'équilibre des puissances fournies aux câbles 10, 12. Cette autorégulation réalisée par les résistances 78, 80 est simple et fiable et elle est indépendante de la charge de l'installation ou de la vitesse de fonctionnement. Le bon fonctionnement peut être contrôlé à l'aide des instruments $l_1$, $l_2$, $V_1$, $V_2$ et analogues.

Les moteurs 38, 42 ainsi que les résistances 78, 80 sont identiques, mais de faibles dispersions sont inévitables. Ces dernières peuvent facilement être compensées par un étalonnage initial au moyen des potentiomètres 64, 66 de réglage du courant des inducteurs 56, 58.

Lors d'un freinage de service ou d'urgence il est quasi impossible d'assurer un freinage sensiblement égal sur les deux boucles 10, 12 et la disproportion des forces de freinage risque de dépasser les possibilités de réglage du dispositif précité. Ceci est également le cas lorsque le freinage provoque l'ouverture du contacteur d'alimentation des moteurs. Dans l'exemple illustrée par les figures, l'ordre de freinage émis par le bloc 54 est transmis à l'embrayage 34 qui accouple les arbres 30, 32. A partir de cet instant les poulies 16, 18 tournent en synchronisme et entraînent les câbles 10, 12 à la même vitesse. La compensation d'un retard de l'un des câbles n'est plus assurée mais les écarts restent faibles pendant la durée de freinage et sont admissibles.

Après une longue période d'arrêt, par exemple en début de journée, les résistances de friction des câbles 10, 12 dues notamment au givre et à la glace peuvent être fort différentes. Pendant la période de mise en route, où l'installation fonctionne sans véhicules en ligne, l'embrayage 34 est embrayé pour un déplacement synchrone des câbles 10, 12. Après débrayage l'installation est prête pour le lancement des véhicules en ligne. L'embrayage 34 peut également être commandé par tout dispositif de sécurité détectant un déséquilibre important entre les deux boucles 10, 12, cette commande s'accompagnant généralement d'un freinage d'urgence.

## Revendications

1. Dispositif d'entrainement d'une installation de transport à deux boucles sans fin de câbles aériens (10, 12), chaque boucle passant dans les stations d'extrémité (14) sur une poulie de renvoi (16, 18) les deux poulies (16, 18) de l'une des stations étant entraînées chacune en rotation par un moteur électrique (38, 42), les deux moteurs étant reliés par un système différentiel électrique,

chaque véhicule (24) étant accouplé en ligne à une paire de câbles parallèles dont l'un appartient à l'une desdites boucles et dont l'autre appartient à l'autre desdites boucles, caractérisé en ce que lesdits véhicules sont désaccouplés desdits câbles et réaccouplés aux stations d'extrémité,

en ce qu'un dispositif de régulation de l'alimentation desdits moteurs électriques comprend une source d'alimentation en courant continu (44) commune aux deux moteurs, deux génératrices tachymétriques (84, 86) de mesure de la vitesse de rotation des moteurs respectifs et un bloc (82) de comparaison du signal de vitesse le plus élevé à une valeur de consigne de vitesse pour élaborer un signal de correction de tension d'alimentation des moteurs,

lesdits moteurs (38, 42) étant des moteurs identiques à excitation indépendante et comportant chacun une résistance électrique (76, 78) à valeur fixe et de caractéristiques identiques insérée en série dans chaque circuit de liaison de l'induit (68, 70) du moteur à la source de courant, de manière à équilibrer en permanence les puissances fournies pur les deux moteurs aux deux boucles sans fin de câbles aériens.

2. Dispositif d'entraînement selon la revendication 1, caractérisé en ce que l'inducteur (56, 58) de chaque moteur (38, 42) est excité séparément et qu'un dispositif de réglage (64, 66) permet un réglage du courant d'excitation de l'inducteur.

3. Dispositif d'entraînement selon la revendication 1, caractérisé par le fait que ladite source d'alimentation (44) comprend un pont de thyristors (72) par une génératrice tachymétrique (84, 86) de mesure de la vitesse de rotation desdites poulies (16, 18).

## Claims

1. Driver device of a transport installation featuring two endless-loop aerial cables (10, 12), each loop running over a guide pulley (16, 18) in the terminal station (14) and the two pulleys (16, 18) of the one terminal station being rotationally driven by an electric motor (38, 42) each and the two motors being connected by means of an electric differential circuit with one another,

every vehicle (24) being coupled on-line with a pair of parallel cables one of which belonging to one of the said loops and the other one belonging to the other said loop, characterized in that the said vehicles are uncoupled from the said cables and coupled-on again to the said terminal stations,

in that a controller device of the power supply system of the said electric motors is provided with a direct-current supply source (44) which is common to the two motors, two tachogenerators (84, 86) for measuring the rotational speed of the respective motor, and a block (82) for comparing the higher speed signal with a specified-speed signal for producing a correction signal for the supply voltage of the motors,

these two motors (38, 42) being identical motors with independent excitation and being provided each with an electric resistor (78, 80) of a fixed value and with identical characteristics and series-connected in the respective connection circuit of the armature (68, 70) of the respective motor with the current source so that the power delivered by the two motors to the two endless-loop aerial cables is permanently balanced.

2. Driving device as per claim 1, characterized in that the field windings (56, 58) of the two motors (38, 42) are separately excited and that a controller device (64, 66) permits the controlling of the exciting current of the field winding.

3. Driving device as per claim 1, characterized in that the said power supply source (44) comprises a thyristor bridge controlled (72) by a tacho-generator (84, 86) for measuring the rotational speed of the said pulleys (16, 18).

## Ansprüche

1. Antriebsvorrichtung einer Transportanlage mit zwei endlosen Luftseilschleifen (10, 12), wobei jede Schleife in den Endstationen (14) um eine Umlenkscheibe (16, 18) läuft, wobei die zwei Scheiben (16, 18) einer der Stationen jede durch einen Elektromotor (38, 42) drehangetrieben sind, wobei die zwei Motoren durch ein elektrisches Differential-System verbunden sind, wobei jedes Fahrzeug (24) mitlaufend an ein Paar von parallelen Seilen gekuppelt ist, von denen das eine zu einer der genannten Schleifen gehört, und von denen das andere zur anderen der genannten Schleifen gehört, dadurch gekennzeichnet, daß die Fahrzeuge von den genannten Seilen abgekuppelt und an den Endstationen wieder angekuppelt werden, und daß eine Regelvorrichtung zum Speisen der genannten Elektromotoren eine für beide Motoren gemeinsame Gleichstromquelle (44), zwei Tachogeneratoren (84, 86) zur Messung der Drehgeschwindigkeit des jeweiligen Motors und einen Block (82) für den Vergleich des Signals der höchsten Geschwindigkeit mit einem Einstellwert für die Geschwindigkeit zwecks Erzeugung eines Korrektursignals für die Speisespannung der Motoren aufweist, wobei die genannten Motoren (38, 42) identische Motoren mit unabhängiger Erregung sind, die beide in den Verbindungsstromkreis des Motorankers (68, 70) mit der Stromquelle in Serie geschaltet einen elektrischen Widerstand (78, 80) mit festem Wert und identischen Charakteristiken aufweisen, um fortlaufend die von den beiden Motoren an die beiden endlosen Luftseilschleifen abgegebenen Leistungen auszugleichen.

2. Antriebsvorrichtung nach Anspruch 1, dadurch gekennzeichnet, daß der Induktor (56, 58) jedes Motors (38, 42) unabhängig erregt wird, und daß eine Regelvorrichtung (64, 66) eine Regelung des Erregerstromes des Induktors ermöglicht.

3. Antriebsvorrrichtung nach Anspruch 1, dadurch gekennzeichnet, daß die genannte Speisequelle (44) eine Thyristorbrücke (72) aufweist, die durch einen Tachogenerator (84, 86) zur Messung der Drehgeschwindigkeit der genannten Scheiben (16, 18) gesteuert wird.

50 26 20 30  34 32  12  10

25

14

54

16

52

24

18

22

28

40

46 78  38  36 44  42  78 80

FIG.1

EP 0 140 756 B2

FIG.2